# EUROPEAN PATENT SPECIFICATION

(11) **EP 2 161 892 B1**
(45) Date of publication and mention of the grant of the patent: **16.01.2013**
(21) Application number: 08163634.2
(22) Date of filing: 03.09.2008
(51) Int. Cl.: H04L 27/10, H04L 27/12, H04L 27/156, H04W 4/20, H04W 4/22

(54) **A method and a communication device for transmitting data signals**
Verfahren und Kommunikationsvorrichtung zur Übertragung von Datensignalen
Procédé et dispositif de communication pour la transmission de signaux de données

(43) Date of publication of application: 10.03.2010
(73) Proprietor: SafeLine Europe, 1200 Woluwé-Saint-Lambert (BE)
(72) Inventor: Jäderberg, Tomas, 13554, TYSERÖ (SE); Odlén, Lars, 1150, BRUSSELS (BE)
(74) Representative: Quintelier, Claude

(56) References cited:
- WO-A-2005/002122
- JP-A- 61 199 356
- US-A- 4 369 425

## Description

The present invention relates to a method for transmitting data signals wherein a first frequency value is assigned to a first bit value and a second frequency value is assigned to a second bit value, said data signal being formed by a sequence of N bits (1 ≤ j ≤ N), wherein N being a natural number generally higher than three.

Such a data signal transmission method is known from US-PS 4 369 425. The known method uses a frequency shift key (FSK) for transmitting data signals to an aircraft.

Sending data signals is also used in cellular phones. The use of cellular phones has become wide spread for the transmission of speech. This is due to the fact that the use of cellular phones has become rather cheap, in particular for applications with low traffic. Indeed, there are no or little subscription rates contrary to fixed lines and the costs are mainly charged for minutes of effective communication. Cellular phones are also flexible in use as there is no need to first install a physical access to a network.

Cellular phones have a voice and a data channel. The voice channel has a limited bandwidth, typically of 3 KHz. Due to the inherent design of the cellular phone protocols, the speech transmission by cellular phones is not equivalent to an analogue transmission link, but comprises a compression algorithm, which leads to a mere representation of the transmitted voice signal. This might result in more limitations than simple frequency responses, such as time skew frequency shifts and lost packages. This makes the cellular phone voice channel not really appropriate for data transmission. A synchronous transmission is disturbed as absolute timing can not be guaranteed and an asynchronous transmission will be disturbed by the cellular phone slot filling, which can add or break signals, hence generating a false triggering.

For the transmission of data signals with cellular phones, the data channel should normally be used, in particular as this data channel has typically a capacity of 9 600 baud. However this requires a transmission between cellular phones as terminals at both ends of the transmission, whereas each of the involved cellular phones needs to have this data transfer abilities. This is not necessarily the case, in particular since this ability implies a higher operational cost.

Another problem that arises when using the voice channel of a cellular phone for data signal transmission is that many cellular phones share the same carrier frequency but transmit or receive in different time-slots, typically every 20 ms. This signifies that real timing of signals can not be guaranteed and that a maximum polling delay effect of 40 ms might occur in a communication. This could thus lead to burst length changes, time and frequency shifts and amplitude variations. Moreover, as the used compression algorithm is optimised for voice transmission it is poorly representing such data signals as rapid frequency shifts or steady tones.

It is an object of the present invention to provide a method and a device for transmitting a data signal by means of a cellular phone thereby using the voice channel of the cellular phone while still providing an efficient and reliable transmission.

For this purpose a method according to the present invention is characterised in that said data signals are transmitted by means of a cellular phone, and wherein a first frequency range is associated with said first frequency value and a second frequency range is associated with said second frequency value, which sequence is converted into a transmission string by using for the j = 1 bit the frequency value associated with the bit value of the j = 1 bit and for each j ≠ 1 bit the frequency value associated with the bit value of the j^{th} bit if the bit value of the j^{th} bit is different from the bit value of the (j-1)^{th} bit and a frequency value which is shifted with respect to the frequency value associated with the (j-1)^{th} bit value if the bit value of the j^{th} bit is equal to the bit value of the (j-1)^{th} bit, said transmission string being asynchronously transmitted in a voice channel of a network used by said cellular phone. In such a manner, two subsequent bits of the transmission string, even if they have the same bit value, are always transmitted at a different frequency value. Recognition and decoding of the received bits in the transmission string thus become a recognition of each time a frequency which is different from the one of the preceding bit in the transmission string. The use of those different frequency values enables an asynchronous transmission and recognition as each time a frequency value different from the preceding one has to be detected. This makes the transmission reasonably insensitive for frequency and time shifts which might occur during transmission in the voice channel. Decoding is obtained by recognising either the first or the second frequency value, indicating the associated bit value, or by recognizing that a frequency shift occurred with respect to the (j-1)^{th} bit, thereby indicating that the received j^{th} bit has the same bit value as the (j-1)^{th} bit.

A first preferred embodiment of a method according to the invention is characterised in that upon shifting said frequency value, the latter is shifted over a predetermined amount, which is larger than said first, respectively said second frequency range. Shifting over a predetermined amount enables a reliable and an easy to implement embodiment. By taking care that the predetermined amount is larger than the first or second frequency range, there is avoided that a false recognition could occur.

A second preferred embodiment of a method according to the present invention is characterised in that for each j ≥ 2 bit within said sequence there is verified if a shifted frequency was used for the conversion of the (j-1)^{th} bit and upon establishing that such a shifted frequency was used for the conversion of the (j-1)^{th} bit, the frequency value used for the j^{th} bit being the associated frequency value to the j^{th} bit. In such a manner, well determined frequencies are used for transmission purposes.

The invention will now be described in more details with reference to the annexed drawings in which :
figure 1 illustrates a preferred embodiment of a device and a method according to the present invention; and
figure 2 is a flowchart, illustrating the method according to the invention.

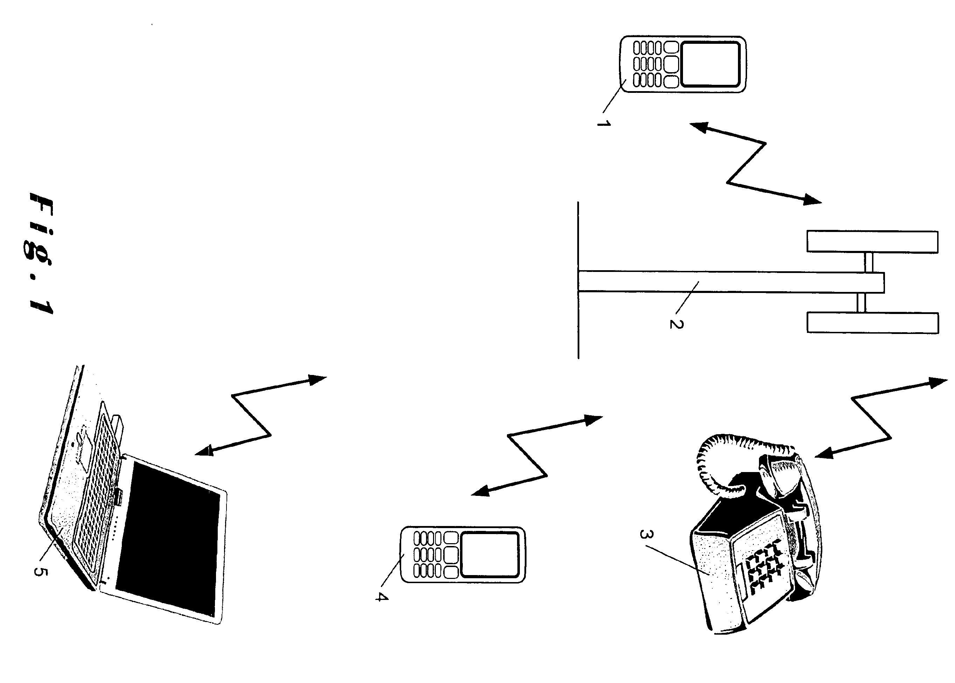

Figure 1 illustrates a cellular phone network. A first cellular phone 1 is provided for communicating with an antenna 2, in order to send and receive voice or speech signals and data signals. The voice signals are transmitted between the first cellular phone 1 and a second cellular phone 4, or between the first cellular phone 1 and a fixed phone 3. Data signals can be transmitted between the first and second cellular phone and between a data processing device 5, such as a computer and the first cellular phone.

The cellular phone voice channel has a limited bandwidth of typically 3KHz. Due to the inherent design of the cellular phone protocols, the transmission of the speech in the voice channel uses a compression algorithm, which leads to a mere representation of the transmitted voice signal. In such a manner, bandwidth is saved during transmission. The use of this compression algorithm implies some limitations as the algorithm is optimised for speech, thereby leading to poor representations for rapid frequency shifts. In addition to time skew, frequency shifts and lost packages may also occur during transmission.

Using the voice channel of a cellular phone for data transmission thus leads to a problem. Moreover, in the modern cellular phone technology, there is a data channel with a 9 600 baud capacity provided so that data will usually be sent via this data channel when using cellular phone technology. However, the use of a data channel requires that both the transmitting and receiving phone have these properties, which requires higher exploitation costs.

For some applications, like for example for emergency calls, devices in elevators, trains or the like, where there is usually only occasional communication, the costs of a specific data channel are not really justified. The present invention therefore provides a method and a device where by using cellular phones, it will be possible to send data signals in the voice channel while still having a reliable transmission.

For this purpose a frequency range is assigned to each bit value of a data signal. The data signal is formed by a sequence of N bits where 1 ≤ j ≤ N and N being a natural number generally higher than three. To a first bit value, for example the bit value "0", a first frequency value f1 with an associated first frequency range is assigned. To a second bit value, for example the bit value "1 ", a second frequency value f2 with an associated second frequency range is assigned. Whereas the first and second frequency range might have a same value, the first and second frequency values must be different in order to recognise them distinctively upon receipt of the transmitted signal. The first frequency value is for example 1,3 KHz and the second frequency value is for example 1,7 KHz. The frequency range is for example 0,1 KHz for both the first and second range. However a different value such as for example 0,10 KHz for the first range and 0,12 for the second range might also be used. The frequency range should be chosen in order to enable a frequency shift during transmission while still enabling a frequency value recognition.

For transmission purposes the N bits data signal is converted into a transmission string by using for the j = 1 bit the frequency value associated with the bit value of the j^{th} bit. For each of the j ≠ 1 bits in the sequence of N bits, the frequency value associated with the bit value of the j^{th} bit is selected if the bit value of the j^{th} is different from the bit value of the (j-1)^{th} bit and a frequency value which is shifted over a value fs, for example fs = 0,2 KHz, with respect to the frequency value associated to the (j-1)^{th} bit value is selected if the bit value of the j^{th} bit is equal to the bit value of the (j-1)^{th} bit.

So for example for an N=3 sequence

| | |
|---|---|
| a) 000 | f1, f1 + fs, f1 + 2fs |
| b) 101 | f2, f1 , f2 |
| c) 011 | f1, f2, f2 + fs |

However for sequences with a larger number of bits, for example N > 5, each time shifting the first or second frequency value might lead to a frequency value which is too high for the allowed transmission band. Instead of shifting by adding a frequency value fs, it could be considered to alternatively add and deduce the frequency value fs. So, for the example 000 this would lead to a transmission string
f1, f1 + fs, (f1 + fs) - fs ⇒f1, f1 + fs, f1. This thus leads to a solution where there would not be two subsequent frequency shifts leading to an increment of the frequency value.

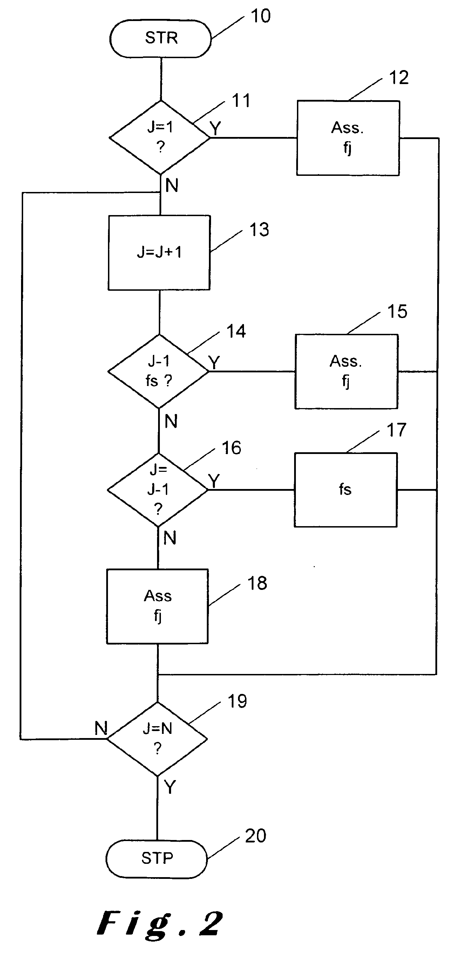

Figure 2 illustrates by means of a flowchart a method for converting the data signal into a transmission string whereby the number of subsequent frequency shifts is limited. The method is started (10) each time a data signal formed by a sequence of N bits has to be converted. There is subsequently verified (11) if the bit of the sequence is the first bit (j=1). When this is the case (11; y), then the frequency value associated with the bit value of the (j = 1)^{th} bit is used (12) for forming the first element of the transmission string. Thereafter, there is verified (19) whether the considered j^{th} bit is the last one of the sequence (j = N?). When this is not the case (19; N) there is jumped to step 13 where the subsequent (j=j+1) bit of the sequence is selected. Thereafter there is verified (14) whether for the preceding bit (j-1) in the sequence a frequency shift was applied for forming the transmission string. If this was the case (14, y) then, and in order to avoid two subsequent frequency shifts, the frequency value assigned to the bit value of the j^{th} bit is used for forming the j^{th} element in the transmission string. When on the other end, there has been no frequency shift applied for forming the (j-1)^{th} element in the transmission string, then there is verified in step 16 if the bit value of the j^{th} bit in the data signal sequence is equal to the bit value of (j-1)^{th} bit. If this is the case (16; y) then a frequency shift is applied (fs; 17). If the bit value of the (j-1)^{th} bit is different from the bit value of the j^{th} bit (16,N), then the associated frequency value is used (18; Ass fj) for forming the j^{th} element in the transmission string. If all N bits of the sequence have been considered (19; y) the transmission string is formed and ready to be transmitted (20).

The frequency value over which the shift occurs may be variable. However it is more convenient to use a predetermined amount which is larger than the first or second frequency range. That the amount over which the frequency value is shifted has to be larger than the first or second frequency range is due to the fact that otherwise there might arise detection problems due to frequency shift upon transmission. By shifting over a frequency value larger than the range, care is taken that a distinctive frequency value can be detected.

Preferably a third frequency value associated with a third frequency range f3 is selected when a shift over a frequency value has to be done. In a way this is equivalent to shifting over a fixed value. The third frequency is different from the first and second frequency, whereas the third frequency range might be equal to the first and second frequency range. So, for example a sequence "00000" will be converted in f1 f3 f1 f3 f1 and a sequence 01101 in f1 f2 f3 f1 f2.

When transmitting the transmission string, a string of the thus formed frequency values is transmitted. Upon receipt of the transmitted string there is verified which frequency is received in order to decode on the basis of the received frequency value and retrieve in such a manner the sequence of N bits. Upon receipt of the string the recognition of the received frequency is done by using the applied frequency range. So, if a frequency ft is obtained, there is verified whether :
f1 - fr ≤ ft ≤ f1 + fr
f2 - fr ≤ ft ≤ f2 + fr
f3 - fr ≤ ft ≤ f3 + fr
In such a manner, even if some frequency shifts occurred during transmission, recognition can still be done in a reliable manner. This enables a substantial immunity to frequency shifts while still allowing a maximum bandwidth. The detection of the frequency is realised by measuring the time between zero crossings or half periods. Counters are for example used for frequency detection in the considered frequency interval f1 ±.fr; f2 ± fr; f3 ± fr.

The counters are continuously read. If one counter is significantly higher (double value) than the other two, the signal is regarded as valid. This valid signal is compared with the previous valid signal. If the signal represents a different frequency, it means the transmission of a new bit, with the consecutive storage of the data. The recognition of this different frequency will trigger a clock signal. The data transmitted in this fashion is self clocking and highly tolerant to timing or frequency jitter. Frequency toggling is done on-the-fly without "silent" periods, this to maximise transmission speed.

The method according to the present invention is preferably used in elevators. In such a manner instead of using fixed telephone lines, cellular phones can be used. The speech signal is sent in the usual manner, whereas the data signals, which are required for a regular operational control are sent by application of the described method.

## Claims

1. A method for transmitting data signals, wherein a first frequency value (f1) is assigned to a first bit value and a second frequency value (f2) is assigned to a second bit value , said data signal being formed by a sequence of N bits (1 ≤ j ≤ N), N being a natural number higher than three, **characterized in that** said data signals being transmitted by means of a cellular phone (1), and wherein a first frequency range is associated with said first frequency value and a second frequency range is associated with said second frequency value, which sequence is converted into a transmission string by using for the j = 1 bit the frequency value associated (12) with the bit value of the j = 1 bit and for each j ≠ 1 bit the frequency value associated (15) with the bit value of the j^{th} bit if the bit value of the j^{th} bit is different from the bit value of the (j-1)^{th} bit and a frequency value which is shifted with respect to the frequency value associated to the (j-1)^{th} bit value if the bit value of the j^{th} bit is equal to the bit value of the (j-1)^{th} bit, said transmission string being asynchronously transmitted in a voice channel of a network used by said cellular phone.

2. The method as claimed in claim 1, **characterized in that** upon shifting said frequency value the latter is shifted over a predetermined amount which is larger than said first respectively said second frequency range.

3. The method as claimed in claim 1 or 2, **characterized in that** for each j≥2 bit within said sequence there is verified if a shifted frequency was used for the conversion of the (j-1)^{th} bit and upon establishing that such a shifted frequency was used for the conversion of the (j-1)^{th} bit, the frequency value used for the j^{th} bit being the associated frequency value to the j^{th} bit.

4. The method as claimed in any one of the claims 1 to 3, **characterized in that** for shifting said frequency value a third frequency value with an associated third frequency range is selected.

5. The method as claimed in any one of the claims 1 to 4, **characterized in that** said first and second associated ranges have a predetermined value.

6. A cellular phone communication device (1), said device comprising a carrier wave generator and having a data input for receiving data signals formed by a sequence of N bits (1 ≤ j ≤ N), N being a natural number higher than three, **characterized in that** said carrier wave generator is provided for generating a first carrier wave carrying a first frequency value (f1) with an associated first frequency range and second carrier wave carrying a second frequency value (f2) with an associated second frequency range, said device further comprising conversion means provided for converting said data signal into a transmission string by using for j=1 the frequency value associated to the bit value of the j^{th} bit and for j ≠ 1 the frequency value associated to the bit value of the j^{th} bit if the bit value of the j^{th} bit is different from the bit value of the (j-1)^{th} bit and a frequency value which is shifted with respect to the frequency value associated to the (j-1)^{th} bit value if the bit value of the j^{th} bit is equal to the bit value of the (j-1)^{th} bit, said transmission string being asynchronously transmitted in a voice channel of a network used by said cellular phone.

## Patentansprüche

1. Verfahren zum Übertragen von Datensignalen, wobei ein erster Frequenzwert (f1) zu einem ersten Bit-Wert zugewiesen wird und ein zweiter Frequenzwert (f2) zu einem zweiten Bit-Wert zugewiesen wird, wobei das Datensignal durch eine Sequenz von N Bits (1 ≤ j ≤ N) gebildet wird, wobei N eine natürliche Zahl größer als drei ist, **dadurch gekennzeichnet, dass** die Datensignale mit Hilfe eines Mobiltelefons (1) übertragen werden, und wobei ein erster Frequenzbereich mit dem ersten Frequenzwert assoziiert wird und ein zweiter Frequenzbereich mit dem zweiten Frequenzwert assoziiert wird, wobei die Sequenz in einen Übertragungsstring umgewandelt wird, indem für das j = 1 Bit der Frequenzwert assoziiert (12) mit dem Bit-Wert des j = 1 Bits und für jedes j ≠ Bit der Frequenzwert assoziiert (15) mit dem Bit-Wert des j-ten Bits, wenn sich der Bit-Wert des j-ten Bits vom Bit-Wert des (j-1)-ten Bits unterscheidet, und ein Frequenzwert, der in Bezug auf den Frequenzwert assoziiert mit dem (j-1)-ten Bit-Wert verschoben ist, wenn der Bit-Wert des j-ten Bits gleich dem Bit-Wert des (j-1)-ten Bits ist, verwendet wird, wobei der Übertragungsstring asynchron in einem Sprachkanal eines Netzwerkes übertragen wird, welches durch das Mobiltelefon verwendet wird.

2. Verfahren nach Anspruch 1, **dadurch gekennzeichnet, dass** beim Verschieben des Frequenzwertes letztgenannter über eine vorbestimmte Menge verschoben wird, die größer als der erste bzw. der zweite Frequenzbereich ist.

3. Verfahren nach Anspruch 1 oder 2, **dadurch gekennzeichnet, dass** für jedes j ≥ 2 Bit innerhalb der Frequenz verifiziert wird, ob eine verschobene Frequenz für die Umwandlung des (j-1)-ten Bits verwendet wurde, und wenn festgestellt wird, dass eine derartige verschobene Frequenz für die Umwandlung des (j-1)-ten Bits verwendet wurde, der Frequenzwert, der für das j-te Bit verwendet wurde, bei dem es sich um den assoziierten Frequenzwert zu dem j-ten Bit handelt.

4. Verfahren nach einem der Ansprüche 1 bis 3, **dadurch gekennzeichnet, dass** zum Verschieben des Frequenzwertes ein dritter Frequenzwert mit einem assoziierten dritten Frequenzbereich ausgewählt wird.

5. Verfahren nach einem der Ansprüche 1 bis 4, **dadurch gekennzeichnet, dass** der erste und zweite assoziierte Bereich einen vorbestimmten Wert haben.

6. Mobiltelefon-Kommunikationsgerät (1), wobei das Gerät einen Trägerwellengenerator umfasst und einen Dateneingang zum Empfangen von Datensignalen gebildet durch eine Sequenz von N Bits (1 ≤ j ≤ N) aufweist, wobei N eine natürliche Zahl größer als drei ist, **dadurch gekennzeichnet, dass** der Trägerwellengenerator zum Erzeugen einer ersten Trägerwelle, welche einen ersten Frequenzwert (f1) mit einem assoziierten ersten Frequenzbereich trägt, und einer zweiten Trägerwelle, welche einen zweiten Frequenzwert (f2) mit einem assoziierten zweiten Frequenzbereich trägt, vorgesehen ist, wobei das Gerät ferner Umwandlungsmittel umfasst, die zum Umwandeln des Datensignals in einen Übertragungsstring vorgesehen sind, indem für j = 1 der Frequenzwert assoziiert mit dem Bit-Wert des j-ten Bits und für j ≠ 1 der Frequenzwert assoziiert mit dem Bit-Wert des j-ten Bits, wenn sich der Bit-Wert des j-ten Bits vom Bit-Wert des (j-1)-ten Bits unterscheidet, und ein Frequenzwert, der in Bezug auf den Frequenzwert assoziiert mit dem (j-1)-ten Bit-Wert verschoben ist, wenn der Bit-Wert des j-ten Bits gleich dem Bit-Wert des (j-1)-ten Bits ist, verwendet wird, wobei der Übertragungsstring asynchron in einem Sprachkanal eines Netzwerkes übertragen wird, welches durch das Mobiltelefon verwendet wird.

## Revendications

1. Méthode pour transmettre des signaux de données, dans laquelle une première valeur de fréquence (f1) est attribuée à une première valeur de bit et dans laquelle une deuxième valeur de fréquence (f2) est attribuée à une deuxième valeur de bit, ledit signal de donnée étant formé par une séquence de N bits (1 ≤ j ≤ N), N étant un nombre naturel supérieur à trois, **caractérisée en ce que** lesdits signaux de données sont transmis par l'intermédiaire d'un téléphone cellulaire (1), et dans laquelle une première plage de fréquence est associée à ladite première valeur de fréquence et une deuxième plage de fréquence est associée à ladite deuxième valeur de fréquence, laquelle séquence étant convertie en une chaîne de transmission en utilisant pour j = 1 bit la valeur de fréquence associée (12) avec la valeur de bit de j = 1 bit et pour chaque j # 1 bit la valeur de fréquence associée (15) avec une valeur de bit de j^{th} bit si la valeur de bit de j^{th} bit est différente de la valeur de bit (j-1)^{th} bit et une valeur de fréquence qui est décalée selon la valeur de fréquence associée à la (j-1)^{th} valeur de bit si la valeur de bit j^{th} bit est égale à la valeur de bit (j-1)^{th} bit, ladite chaîne de transmission étant transmise de façon asynchrone dans un canal vocal d'un réseau utilisé pour ledit téléphone cellulaire.

2. Méthode selon la revendication 1, **caractérisée en ce que** lors du décalage de ladite valeur de fréquence cette dernière est décalée selon une grandeur prédéterminée qui est plus large que ladite première respectivement deuxième plage de fréquence.

3. Méthode selon la revendication 1 ou 2, **caractérisée en ce que** pour chaque j≥2 bit dans ladite séquence il est vérifié si un décalage de fréquence a été utilisé pour la conversion du (j-1)^{th} bit et lors de l'établissement qu'un tel décalage de fréquence a eu lieu pour la conversion du (j-1)^{th} bit, la valeur de fréquence utilisée pour le j^{th} bit est la valeur de fréquence associée au j^{th} bit.

4. Méthode selon l'une quelconque des revendications 1 à 3, **caractérisée en ce que** pour un décalage de ladite valeur de fréquence, une troisième valeur de fréquence avec une troisième plage de fréquence associée est sélectionnée.

5. Méthode selon l'une quelconque des revendications 1 à 4, **caractérisée en ce que** ladite première et ladite deuxième plages associées ont une valeur prédéterminée.

6. Un dispositif de communication sous forme d'un téléphone cellulaire (1), ledit dispositif comprenant un générateur d'ondes porteuses et ayant une entrée de données pour recevoir les signaux de données formés par une séquence de N bits (1 ≤ j ≤ N), N étant un nombre naturel supérieur à trois, **caractérisé en ce que** ledit générateur d'ondes porteuses est agencé pour générer une première onde porteuse portant une première valeur de fréquence (f1) avec une première plage de fréquence associée et une deuxième onde porteuse portant une seconde valeur de fréquence, ledit dispositif comprenant en outre dés moyens de conversion agencés pour convertir ledit signal de données en une chaîne de transmission en utilisant pour j = 1 la valeur de fréquence associée à la valeur de bit de j^{th} bit et pour j ≠ 1 la valeur de fréquence associée à la valeur de bit de j^{th} bit si la valeur de j^{th} bit est différente de la valeur de bit (j-1)^{th} bit et une valeur de fréquence qui est décalée selon la valeur de fréquence associée à la valeur de (j-1)^{th} bit si la valeur de bit de j^{th} bit est égale à la valeur de bit (j-1)^{th} bit, ladite chaîne de transmission étant transmise de façon asynchrone dans un canal vocal d'un réseau utilisé par ledit téléphone cellulaire.
